# EUROPEAN PATENT APPLICATION

(11) **EP 4 818 966 A1**
(43) Date of publication of application: **07.10.2026**
(21) Application number: 24897137.6
(22) Date of filing: 18.10.2024
(51) Int. Cl.: G06F 40/56, G06F 16/332

(54) **INFORMATION PROCESSING DEVICE, METHOD, AND PROGRAM**

(30) Priority: 27.11.2023 JP 2023200138
(71) Applicant: Canon Kabushiki Kaisha, Tokyo 146-8501 (JP)
(72) Inventor: YAMAMOTO, Shinji, Tokyo 146-8501 (JP)
(74) Representative: TBK
(86) International application number: PCT/JP2024/037266
(87) International publication number: WO 2025/115447

(57) **Abstract**

An information processing apparatus comprises acquisition means for acquiring feeling information of a user based on at least one of a captured image and an audio of the user; prompt generation means for generating a prompt based on the feeling information and a keyword extracted from the audio; and output means for outputting a response obtained using the prompt generated by the prompt generation means.

## Description

### TECHNICAL FIELD

The present invention relates to an information processing apparatus, a method, and a program.

### BACKGROUND ART

In inquiries to companies and creation of product plans, chatbots have been used to reduce labor costs and provide 24-hour support. The chatbot is a program and/or apparatus for automatically having a conversation with a user via text and/or audio. PTL 1 discloses a method of having a conversation with a user based on browsing information and feeling information of the user estimated based on a keyword extracted from audio information of the user. On the other hand, along with the spread of generative AI, creation of more sophisticated proposals than conventional chatbots is realized. For example, if "please tell me famous tourist spots in Tokyo" is input to ChatGPT, information that associates the names of some representative tourist spots with brief explanations of the tourist spots is output. Here, it is known that the quality of input information (also called a prompt) is important for generative AI.

### CITATION LIST

### PATENT LITERATURE

PTL 1: Japanese Patent Laid-Open No. 2021-103411

### NON-PATENT LITERATURE

NPTL 1: M. Sarma, "Emotion identification from raw speech signals using DNNs," Proc. Interspeech 2018
NPTL 2: S. Li, "Deep Facial Expression Recognition: A Survey", IEEE transactions on affective computing, 2020
NPTL 3: Sharma, P., & Li, Y., "Self-Supervised Contextual Keyword and Keyphrase Retrieval with Self-Labelling", 2019

### SUMMARY OF INVENTION

### TECHNICAL PROBLEM

However, if input information to generative AI includes an unnecessary word and/or modifier, it may be impossible to obtain an expected output. Especially, when an audio is input, an important keyword and an unnecessary keyword in an utterance of a user cannot be discriminated, and the quality of the input information to the generative AI lowers. NPTL 1 does not consider determination of the importance of a keyword included in an utterance of a user.

It is an object of the present invention to improve the accuracy of a response generated in response to a question from a user.

### SOLUTION TO PROBLEM

To achieve the object of the present invention, an information processing apparatus according to an embodiment of the present invention has the following configuration. That is, the information processing apparatus includes acquisition means for acquiring feeling information of a user based on at least one of a captured image and an audio of the user, prompt generation means for generating a prompt based on the feeling information and a keyword extracted from the audio, and output means for outputting a response obtained using the prompt generated by the prompt generation means.

### ADVANTAGEOUS EFFECTS OF INVENTION

According to the present invention, it is possible to improve the accuracy of a response generated in response to a question from a user.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram showing the hardware configuration of an information processing apparatus according to the first embodiment (Example 1);
Fig. 2 is a block diagram showing the functional configuration of the information processing apparatus according to the first embodiment (Example 1);
Fig. 3 is a view showing feeling information according to the first embodiment (Example 1);
Fig. 4 is a table showing keyword information according to the first embodiment (Example 1);
Fig. 5 is a view showing a prompt according to the first embodiment (Example 1);
Fig. 6 is a view showing a response generated by generative AI according to the first embodiment (Example 1);
Fig. 7 is a flowchart for explaining conversational response generation processing according to the first embodiment (Example 1);
Fig. 8A is a view showing a UI displayed on a display unit according to the first embodiment (Example 1);
Fig. 8B is an enlarged view of a portion of the UI shown in Fig. 8A (Example 1);
Fig. 9 is a table for explaining template information according to the first embodiment (Example 1);
Fig. 10 is a view showing a prompt according to the second embodiment (Example 2);
Fig. 11 is a view showing customer service support information generated by generative AI according to the second embodiment (Example 2); and
Fig. 12 is a flowchart for explaining generation processing of customer service support information according to the second embodiment (Example 2).

### DESCRIPTION OF EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

An information processing apparatus 100 recognizes the feeling of a subject from a video including the subject and/or the audio of the subject. Furthermore, based on the feeling of the subject and utterance contents, the information processing apparatus 100 generates information (also called a prompt) to be input to generative AI. Then, the information processing apparatus 100 generates a response to a conversation with the subject (for example, a customer who has visited a store) by inputting the prompt to the generative AI. This embodiment will exemplify a system in which the customer service is provided in a chatbot format in a real store. Note that this embodiment is also applicable to a scene in which the customer service is provided to a customer in a virtual store.

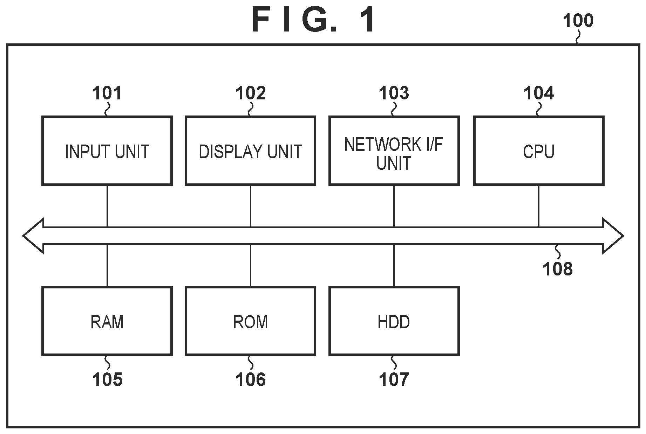

Fig. 1 is a block diagram showing the hardware configuration of the information processing apparatus according to the first embodiment.

The information processing apparatus 100 includes an input unit 101, a display unit 102, a network I/F unit 103, a CPU 104, a RAM 105, a ROM 106, an HDD 107, and a data bus 108.

The input unit 101 includes, for example, at least one of a keyboard, a mouse, a touch panel, and a microphone, and accepts user input.

The display unit 102 is, for example, a liquid crystal display or the like, and displays information such as the results of various kinds of processes. The input unit 101 and the display unit 102 are communicably connected to other function units via the data bus 108.

The network I/F unit 103 is connected to an external apparatus (not shown) to be able to transmit/receive various kinds of information via the Internet.

The CPU 104 reads out control computer programs stored in the ROM 106 and loads them into the RAM 105, thereby executing various kinds of control processes. When the CPU 104 executes an image processing program stored in the ROM 106 or the HDD 107, image processing on image data is implemented.

The RAM 105 is used as a temporary storage area that stores a work memory or a program executed by the CPU 104.

The HDD 107 stores various kinds of information such as image data, setting parameters, or various kinds of programs. Furthermore, the HDD 107 can accept data input from an external apparatus (not shown) via the network I/F unit 103.

Image data and the like received from an external apparatus (not shown) via the network I/F unit 103 are transmitted/received to/from the CPU 104, the RAM 105, and the ROM 106 via the data bus 108.

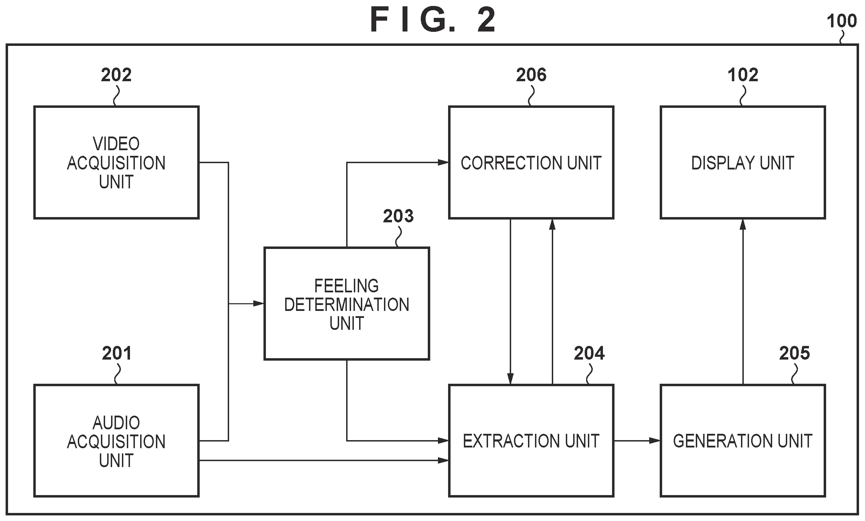

Fig. 2 is a block diagram showing the functional configuration of the information processing apparatus according to the first embodiment.

The information processing apparatus 100 includes an audio acquisition unit 201, a video acquisition unit 202, a feeling determination unit 203, an extraction unit 204, a generation unit 205, and a correction unit 206.

The audio acquisition unit 201 acquires the audio of the user via the input unit 101 (for example, a microphone). The audio acquisition unit 201 may acquire the audio of the user stored in the HDD 107 or the audio of the user stored in an external apparatus (for example, a server).

The video acquisition unit 202 acquires, via the network I/F unit 103, a video including the user, which has been captured by an external camera. The video acquisition unit 202 may acquire a video including the user, which is stored in the HDD 107, or a video including the user, which is stored in an external apparatus (for example, a server).

Based on the audio acquired by the audio acquisition unit 201 and/or the video acquired by the video acquisition unit 202, the feeling determination unit 203 generates feeling information of a partner (that is, a user) with which the information processing apparatus 100 has a conversation.

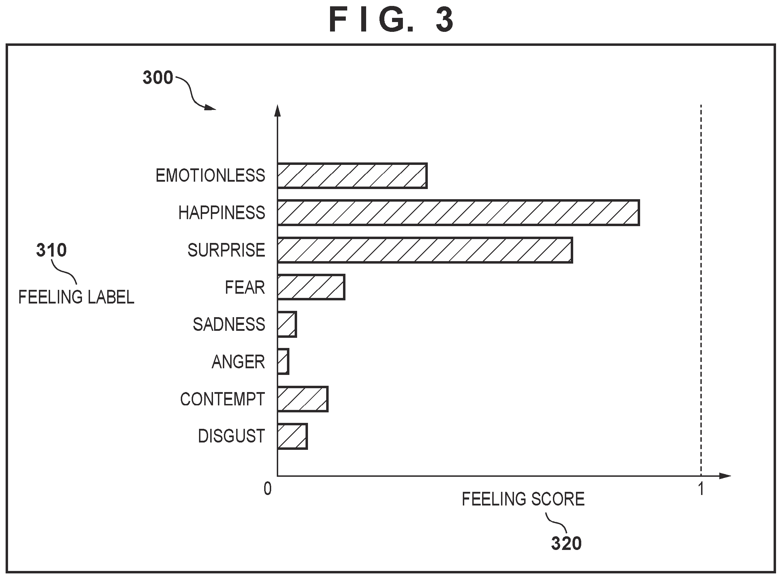

Fig. 3 is a view showing feeling information according to the first embodiment.

Feeling information 300 includes a feeling label 310 representing the feeling of the user such as "happiness", "surprise", "fear", "sadness", "anger", "contempt", "disgust", or "emotionless", and a feeling score 320 of the feeling label 310. The feeling score 320 is represented by a scalar value within the range of 0 to 1. As the black bar of the feeling label 310 is closer to 1, the likelihood that the user has the feeling of the feeling label 310 is higher. The explanation will return to Fig. 2.

Based on an immediately preceding response generated by the generation unit 205, the audio of the user acquired from the audio acquisition unit 201, and the feeling information 300 acquired from the feeling determination unit 203, the extraction unit 204 determines the importance of a keyword included in the immediately preceding response and/or the audio of the user. The extraction unit 204 stores keyword information that links a keyword with the feeling information 300 for each time series of a conversation with the user in a database server (not shown) and/or the HDD 107.

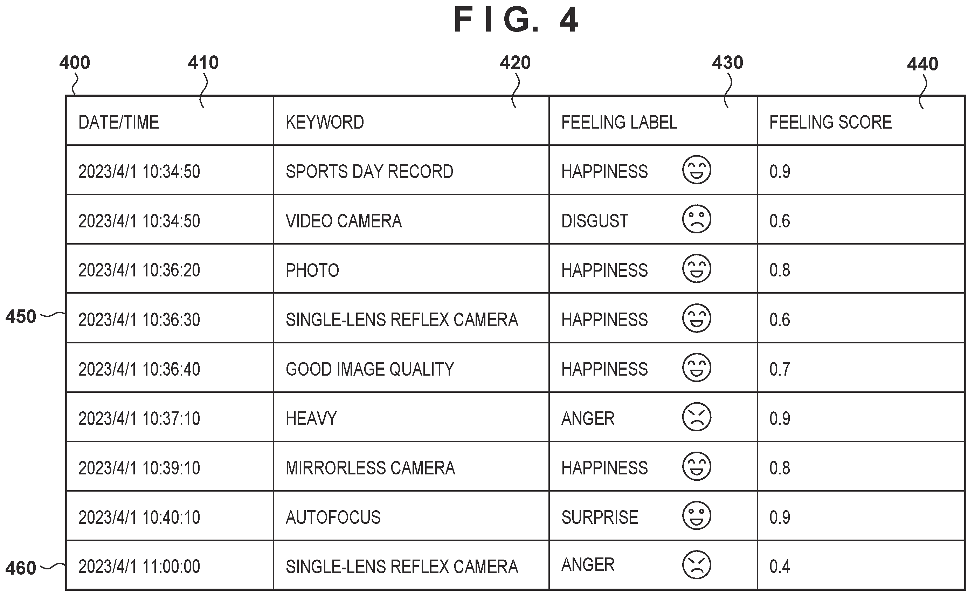

Fig. 4 is a table showing keyword information according to the first embodiment.

Keyword information 400 includes a date/time 410, a keyword 420, a feeling label 430, and a feeling score 440. The date/time 410 represents the time at which the extraction unit 204 extracts the keyword 420 from the latest response and/or the audio of the user. Then, the keyword 420 is linked with the feeling label 430 of the user and the feeling score 440. For example, "sports day record" of the keyword 420 is linked with "happiness" of the feeling label 430 and "0.9" of the feeling score 440. Note that a symbol representing the feeling is displayed to the right of the feeling of the feeling label 430 but need not be displayed, as required. The explanation will return to Fig. 2.

The extraction unit 204 generates a prompt based on the audio acquired from the audio acquisition unit 201, the keyword information of the database server, conversation state information, and correction information (to be described later) acquired from the correction unit 206. The conversation state information is information representing the purpose of the conversation with the current user. For example, assuming the customer service in a store, the conversation state information includes information representing the sequence of the customer service including "initial state", "confirmation of a visit purpose", "proposal of a product", and "explanation of details of the product". At this time, the extraction unit 204 internally holds information of a product category and/or product name in accordance with the conversation state information. The product category means, for example, the type of a product sold in a store, such as a camera, a vacuum cleaner, and a refrigerator. The product name means, for example, a specific product name such as the model name of a camera.

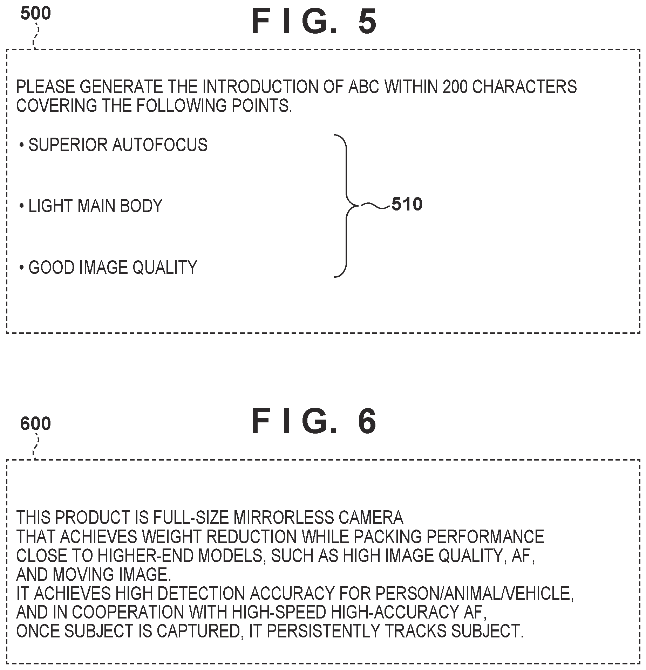

Fig. 5 is a view showing a prompt according to the first embodiment.

A prompt 500 is input information to the generative AI of the generation unit 205 (to be described later). The prompt 500 shown in Fig. 5 indicates input information in a case where "explanation of details of the product" is selected as the conversation state information. For example, the prompt 500 includes a message "please generate the introduction of ABC within 200 characters covering the following points" as an instruction to the generative AI at the time of response generation, and keywords 510. The keywords 510 are keywords at the time of response generation, and include, for example, "superior autofocus, light main body, and good image quality". The explanation will return to Fig. 2.

The generation unit 205 generates a response by inputting the prompt 500 of Fig. 5 generated by the extraction unit 204 to the generative AI (for example, ChatGPT).

Fig. 6 is a view showing a response generated by the generative AI according to the first embodiment.

A response 600 is a response generated by the generative AI based on the prompt 500 of Fig. 5. The response 600 includes a product description of ABC. At this time, the response 600 includes only a textual description of the product, but may include a drawing, a table, and an image in accordance with the instruction of the prompt 500. The explanation will return to Fig. 2.

The display unit 102 presents, to the user, the response 600 (see Fig. 6) generated by the generation unit 205 using the generative AI.

The correction unit 206 corrects the feeling label and/or feeling score of the keyword information 400 and/or the conversation state information based on the keyword information 400 in the database server (not shown) and/or the HDD 107 and transition of the feeling information.

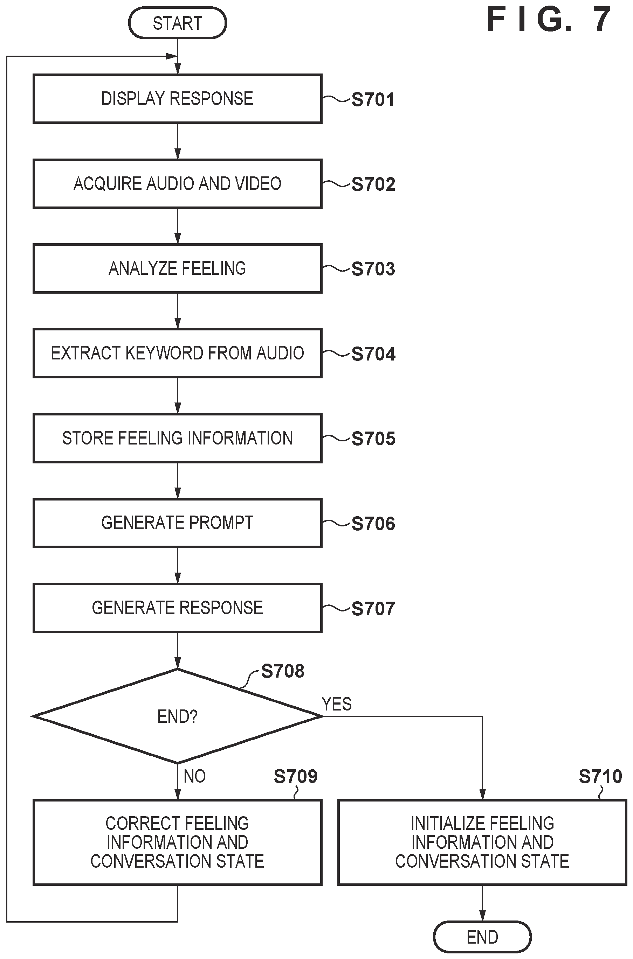

Fig. 7 is a flowchart for explaining conversational response generation processing according to the first embodiment. The processing shown in Fig. 7 is started when, for example, the information processing apparatus 100 receives a response generation instruction from the user via the input unit 101.

In step S701, the display unit 102 displays the response (shown in Fig. 6) generated by the generation unit 205 using the generative AI. If the conversation state is the initial state, the display unit 102 displays "are you looking for something?" as a general question to the user (for example, a customer who is looking for a desired product). This embodiment assumes that the display of a response portion on the display unit 102 is updated based on a response generated in processes of steps S702 to S709. At this time, the information processing apparatus 100 may display, on the display unit 102, data obtained by converting a audio obtained in the conversation with the user into text and/or the extracted keyword information 400.

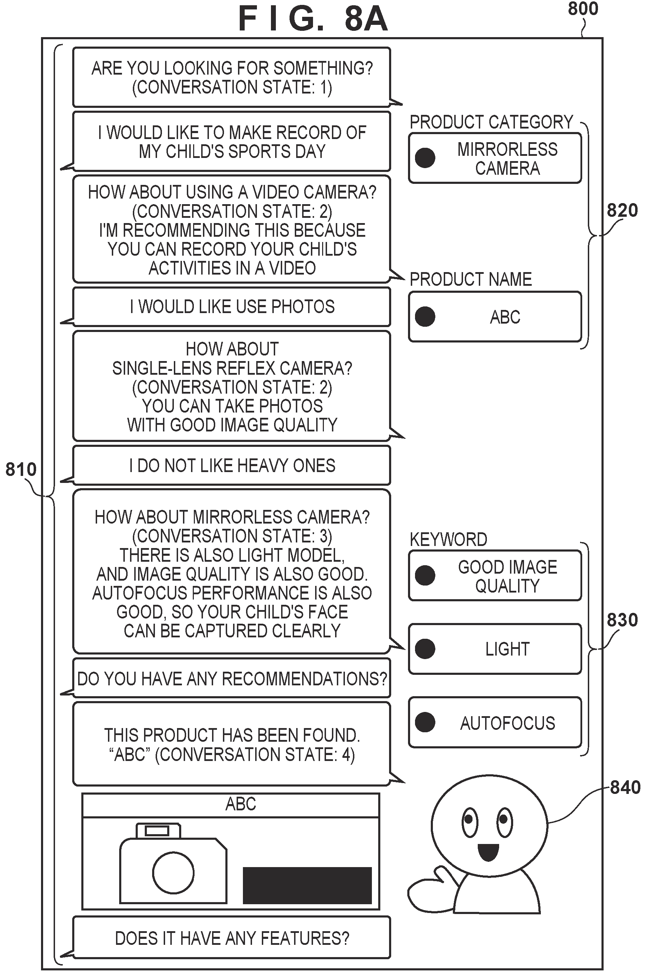

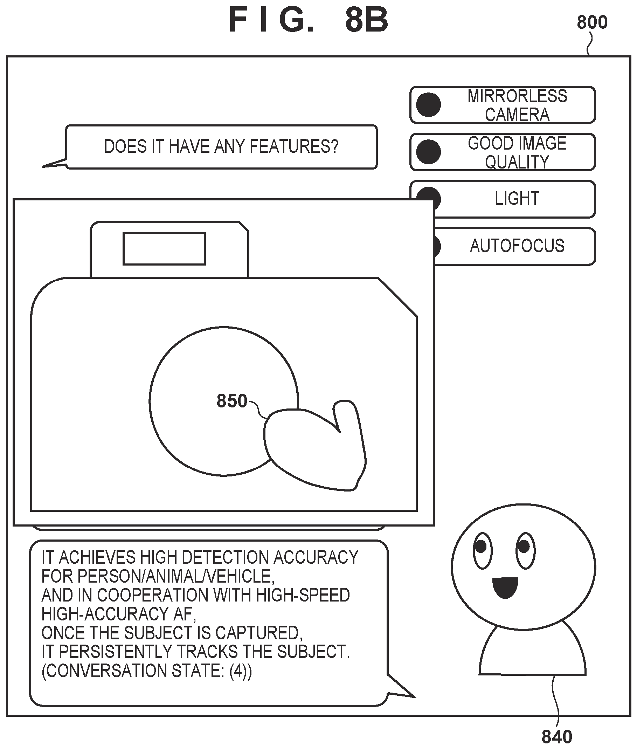

Fig. 8A is a view showing a UI displayed on the display unit according to the first embodiment. Fig. 8B is an enlarged view of a portion of the UI shown in Fig. 8A.

In a left region 810 of a screen 800 on the display unit 102, the contents (that is, the conversation history) of a past conversation with the user (in this example, a customer who is looking for a desired camera) are displayed. In an upper right region 820 of the screen 800, a product category ("mirrorless camera") and a product name ("ABC") are displayed. In a region 830 located below the region 820, keywords extracted from the conversation in the region 810 are displayed. A clerk avatar 840 that provides the customer service to the user is displayed at a position below the region 830. For example, the contents of the conversation in the region 810, which correspond to the keywords ("good image quality", "light", and "autofocus") in the region 830, may be highlighted by thick characters and/or coloring. Product description display may be performed by arranging a hand 850 of the clerk avatar 840 at a characteristic position of the product in a product introduction page (see Fig. 8B). The explanation will return to Fig. 7.

In step S702, the audio acquisition unit 201 acquires the audio of the user during the conversation. The video acquisition unit 202 acquires a video including the user during the conversation.

In step S703, the feeling determination unit 203 analyzes the feeling of the user during the conversation. The feeling determination unit 203 analyzes the feeling of the user based on the audio of the user and/or the video including the user using a learned model obtained by performing deep learning. The feeling analysis processing by the feeling determination unit 203 can be executed by a known technique of analyzing the feeling of a user from an audio and/or a video (images). The feeling determination unit 203 can acquire the feeling information of the user from the audio using the method described in NPTL 1. Furthermore, the feeling determination unit 203 can acquire the feeling information of the user from the video (more specifically, the images forming the video) using the method described in NPTL 2.

In step S704, the extraction unit 204 extracts a keyword based on the immediately preceding response and the audio of the current user. That is, the extraction unit 204 extracts one or more keywords from the contents of the response presented to the user in the past and the audio of the user. These keywords are used to generate a prompt. The extraction unit 204 extracts a keyword from the audio of the user using a known AI service. For example, the keyword extraction processing can be executed based on a known technique of converting audio data into text and a known technique of automatically extracting a characteristic phrase and/or word from the text. The extraction unit 204 converts the audio of the user into text using an API that converts audio data into text, such as the Google Cloud Speech-to-Text API. Similar to the method described in NPTL 3, the extraction unit 204 extracts a keyword from text using an API that automatically extracts a characteristic phrase and/or word from text.

In step S705, the extraction unit 204 stores the keyword information 400 that links the extracted keyword with the feeling information analyzed by the feeling determination unit 203 in the database server (not shown) and/or the HDD 107.

In step S706, the extraction unit 204 generates a prompt by inserting the keyword of the keyword information 400 into a template (to be described later). The extraction unit 204 acquires template information for generating a prompt based on the conversation state and correction information. Furthermore, the extraction unit 204 corrects the contents of the prompt based on the keyword information 400 and the correction information.

Based on the conversation state, the extraction unit 204 acquires "template information" stored in advance in the database server (not shown) or the like.

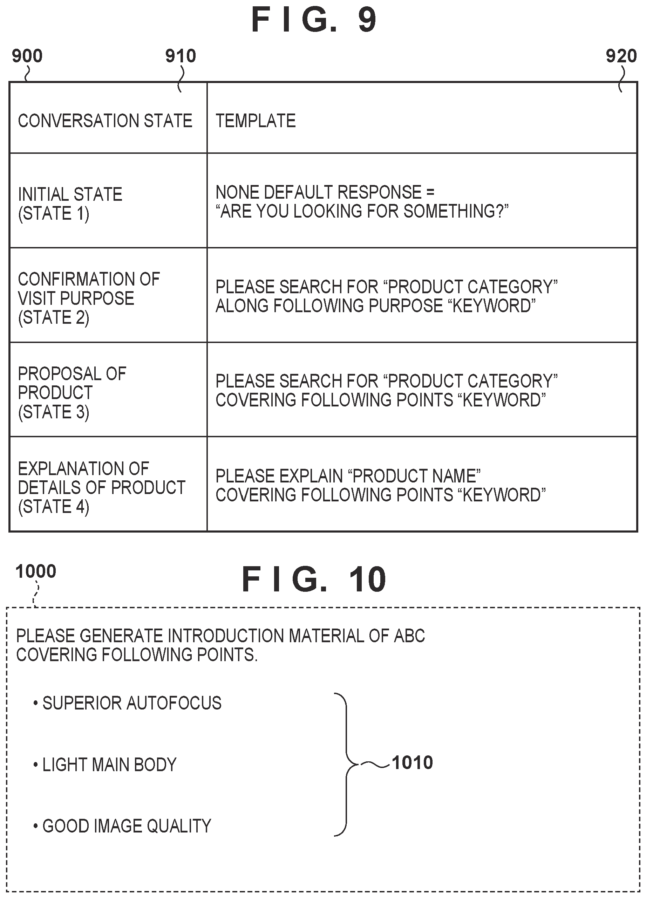

Fig. 9 is a table for explaining template information according to the first embodiment.

Template information 900 is information that associates a conversation state 910 with a template 920 for generating a prompt. The conversation state 910 includes conversation states representing the sequence of the customer service including "initial state (state 1)", "confirmation of a visit purpose (state 2)", "proposal of a product (state 3)", and "explanation of details of the product (state 4)". Note that the conversation state 910 may include less than four conversation states or five or more conversation states. The template 920 represents the template of a prompt for providing an optimum response to the user in accordance with the conversation state 910. For example, in a case where the conversation state 910 is the initial state (state 1), the template 920 corresponding to state 1 is "are you looking for something?".

Next, the extraction unit 204 selects a keyword to be applied to the template 920 based on the keyword information 400. The keyword selection processing can be executed based on the feeling information (feeling label 430 and feeling score 440) of the keyword information 400 and a predetermined keyword selection condition. For example, the keyword selection condition includes "a keyword associated with a feeling of happiness and having a feeling score of 0.8 or more" and "a keyword associated with a feeling of surprise and having a feeling score of 0.8 or more".

The extraction unit 204 can select "sports day record", "photo", "good image quality", "mirrorless camera", and "autofocus" from the keyword information 400 shown in Fig. 4 based on the predetermined keyword selection condition. The keyword selection condition may include "the opposite word to a keyword associated with a feeling of anger and having a feeling score of 0.9 or more". For example, the extraction unit 204 can select "light" which is the opposite word to "heavy" from the keyword information 400 shown in Fig. 4 based on "the opposite word to a keyword associated with a feeling of anger and having a feeling score of 0.9 or more". That is, the extraction unit 204 can generate a prompt based on one or more keywords associated with a specific type of a feeling among the plurality of keywords extracted from the audio. The extraction unit 204 can generate a prompt based on, among the plurality of keywords, one or more keywords that are associated with the specific type of the feeling and have a likelihood of indicating the feeling, which is equal to or higher than a threshold.

Next, the extraction unit 204 generates a prompt by inserting the product category, the product name, and the selected keywords managed together with the conversation state into corresponding portions of the template 920. More specifically, the extraction unit 204 inserts the keywords selected (extracted) from the keyword information 400 into "product category", "product name", and "keyword" of the template 920 shown in Fig. 9, thereby generating a prompt. The explanation will return to Fig. 7.

In step S707, based on the prompt generated by the extraction unit 204, the generation unit 205 generates a response to be presented to the user. The thus generated response is displayed on the display unit 102 in step S701. Note that Fig. 2 shows an example in which the information processing apparatus 100 includes the display unit 102, but the information processing apparatus 100 and the display unit 102 may be connected by a wired or wireless connection medium. In either case, the CPU 104 of the information processing apparatus 100 executes display control for displaying, on the display screen, the response obtained based on the prompt. Instead of or in addition to the display of the response, the information processing apparatus 100 according to this embodiment can output the response by a audio.

In step S708, the generation unit 205 determines whether the conversation with the user has ended. If it is determined that the conversation with the user has ended (YES in step S708), the generation unit 205 advances the process to step S710. On the other hand, if it is determined that the conversation with the user has not ended (NO in step S708), the generation unit 205 advances the process to step S709.

In step S709, the correction unit 206 corrects the feeling information and the conversation state based on following conditions 1 to 4. The correction information is information obtained by correcting, by the correction unit 206, the feeling information (feeling label 430 and feeling score 440) of the keyword information 400 or the conversation state 910 of the template information 900.

### (Method of Correcting Feeling Information Based on Condition 1)

A method in which the correction unit 206 corrects the current feeling information based on past feeling information in a case where the past feeling information and the current feeling information corresponding to the same keyword are different in the keyword information 400 will be described with reference to Fig. 4.

The correction unit 206 acquires past (second time) keyword information 450 including "single-lens reflex camera" from the database server (not shown) and/or the HDD 107 based on the keyword 420 ("single-lens reflex camera") of current (first time) keyword information 460. The keyword information 450 and the keyword information 460 each includes the keyword 420 ("single-lens reflex camera"). However, the feeling label 430 ("anger") of the keyword information 460 is different from the feeling label 430 ("happiness") of the keyword information 450. In this case, the correction unit 206 compares the keyword information 450 with the keyword information 460, and determines the feeling label 430 with a higher numerical value of the feeling score 440 from the pieces of keyword information. The feeling score 440 ("0.6") of the keyword information 450 is higher than the feeling score 440 ("0.4") of the keyword information 460. Therefore, the correction unit 206 corrects "anger" of the feeling label 430 of the keyword information 460 to "happiness", and corrects "0.4" of the feeling score 440 to "0.6". Note that in the above-described correction method, as the current feeling information (the feeling label 430 of the keyword information 460 or the like), the oldest feeling information (the feeling label 430 of the keyword information 450) in the time series may be adopted, the latest time feeling information may be adopted, or feeling information based on the average value of all the past feeling scores may be adopted.

### (Method of Correcting Conversation State Based on Condition 2)

A method in which the correction unit 206 changes the conversation state to the next conversation state when information (product category, product name, and the like) necessary for transition of the conversation state is obtained will be described. Based on the predetermined condition for transition of the conversation state, the correction unit 206 transitions the current conversation state to the next conversation state.

For example, it is defined that the conversation state transitions in the order of "initial state (to be referred to as state 1 hereinafter)", "confirmation of a visit purpose (to be referred to as state 2 hereinafter)", "proposal of a product (to be referred to as state 3 hereinafter)", and "explanation of details of the product (to be referred to as state 4 hereinafter)". With respect to states 1 to 4, a transition condition from one conversation state to another conversation state will be described. A transition condition from state 1 to state 2 includes a condition that a conversation starts. A transition condition from state 2 to state 3 includes a condition that a product category is obtained. A transition condition from state 3 to state 4 includes a condition that a product name is obtained. In a case where the current keyword information 400 includes a predetermined product category and/or product name, the correction unit 206 transitions the current conversation state (for example, state 2) to the next conversation state (for example, state 3).

### (Method of Correcting Conversation State Based on Condition 3)

When a specific phrase is obtained during the conversation with the user, the correction unit 206 performs correction of returning the current conversation state (for example, state 2) to the previous conversation state (for example, state 1). For example, a phrase for returning the conversation state, such as "I'd like to see other products" or "I'd like to look for products other than cameras", is preset. Then, when the above phrase is acquired during the conversation with the user, the correction unit 206 returns the conversation state to the previous conversation state. Alternatively, when the user operates the product category and/or product name on the screen 800 on the display unit 102 and clears (removes) or changes the product category and/or product name, the current conversation state may be returned to the previous conversation state. That is, the correction unit 206 can change the conversation state in response to acceptance of a user operation of removing, from the display screen, one or more keywords among the keywords extracted from the audio.

### (Method of Correcting Conversation State Based on Condition 4)

In a case where the feeling information obtained for the latest response is a negative feeling, the correction unit 206 performs correction of returning the conversation state to the previous state. The negative feeling indicates "fear", "sadness", "anger", "contempt", or "disgust" of the feeling label 310 shown in Fig. 3. First, the correction unit 206 acquires, among the pieces of keyword information 400 in the database server (not shown) and/or the HDD 107, pieces of keyword information for a preset period, for example, a period from 1 minute ago to the current time. In a case where the number of negative feelings among the pieces of feeling information (feeling labels 430) included in the pieces of acquired keyword information exceeds a preset ratio, the correction unit 206 returns the current conversation state to the previous conversation state. For example, if it is decided to return the current conversation state (state 2) to the previous conversation state (state 1), the correction unit 206 causes the generation unit 205 to generate responses such as "would you like to look for other categories?" and "may I suggest other products?", and displays one of the generated responses on the display unit 102. Alternatively, the correction unit 206 may select a response suitable for the conversation state after the correction from the responses generated by the generation unit 205 from the past to the present, and display the selected response on the display unit 102.

As described above, according to the first embodiment, it is possible to present a suitable response to the user in accordance with the change of the feeling of the user. This can prevent the user from feeling stressed about the response presented by the information processing apparatus 100 (more specifically, a chatbot), thereby improving the purchase intention of the user.

### <Second Embodiment>

An information processing apparatus 100 according to this embodiment recognizes the feeling of a subject from a video including the subject and/or the audio of the subject, and evaluates the importance of a keyword in a conversation between the subject (customer) and a clerk. Next, based on utterance contents and the importance of the keyword, the information processing apparatus 100 generates information (also called a prompt) to be input to generative AI. Then, the information processing apparatus 100 generates customer service support information for the clerk by inputting the prompt to the generative AI. This embodiment will describe a system that supports the clerk who provides the customer service in a store but may be applied to, for example, a system that supports a patient interview with a doctor in a medical scene. Note that in the second embodiment, differences from the first embodiment will be described.

An extraction unit 204 determines the importance of a keyword in a audio based on the audio in a conversation between a clerk and a user (customer) acquired from a audio acquisition unit 201 and feeling information acquired from a feeling determination unit 203. The extraction unit 204 stores keyword information that links the keyword and the importance with each other in a database server (not shown) and/or an HDD 107. The extraction unit 204 generates a prompt to be input to generative AI in the same procedure as in the first embodiment.

Fig. 10 is a view showing a prompt according to the second embodiment.

A prompt 1000 is input information to generative AI of a generation unit 205. The prompt 1000 includes "please generate the introduction material of ABC covering the following points" as an instruction to the generative AI at the time of material generation, and keywords 1010. The keywords 1010 are keywords at the time of material generation, and include, for example, "superior autofocus, light main body, and good image quality". As compared with the prompt 500, the prompt 1000 does not limit the number of characters of an output (deliverable) from the generative AI, and permits representations (for example, a drawing, a table, and an image) other than a textual response. Therefore, the deliverable (that is, the introduction material of the product) generated by the generative AI based on the prompt 1000 is different from a deliverable generated by the generative AI based on the prompt 500.

Next, the generation unit 205 generates customer service support information by inputting the prompt 1000 of Fig. 10 generated by the extraction unit 204 to the generative AI (for example, ChatGPT).

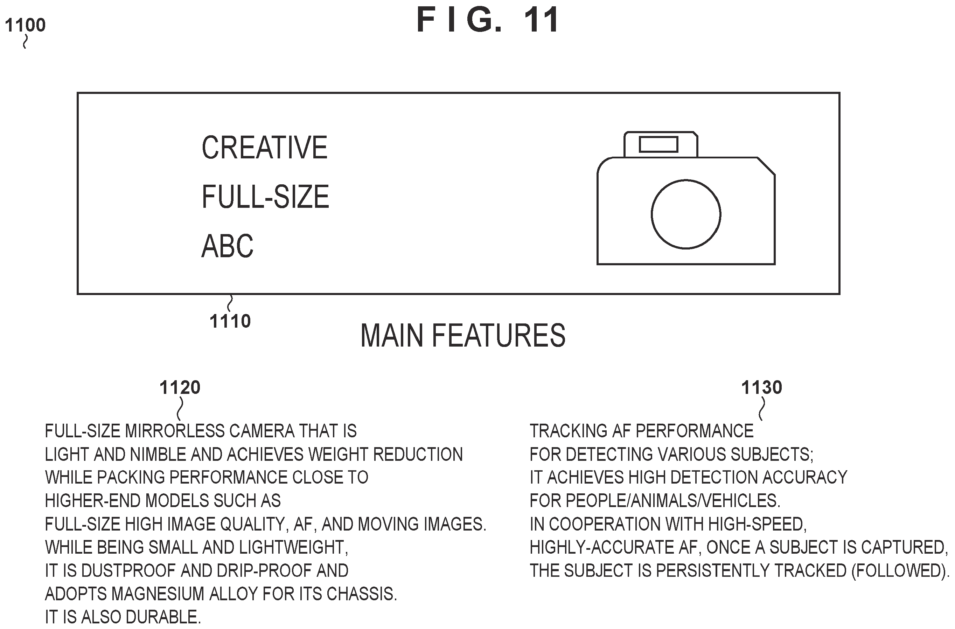

Fig. 11 is a view showing customer service support information generated by the generative AI according to the second embodiment.

Customer service support information 1100 includes a region 1110, a region 1120, and a region 1130. The region 1110 includes information for explaining the features of the product to the user in an easy-to-understand manner. The region 1110 includes, for example, a photo of the product and slogans (for example, "creative", "full-size", and "ABC"). The region 1120 and the region 1130 each include a product description corresponding to the keywords 1010 shown in Fig. 10. For example, the region 1120 includes a product description corresponding to "light main body and good image quality" of the keywords 1010. The region 1130 includes a product description corresponding to "superior autofocus" of the keywords 1010.

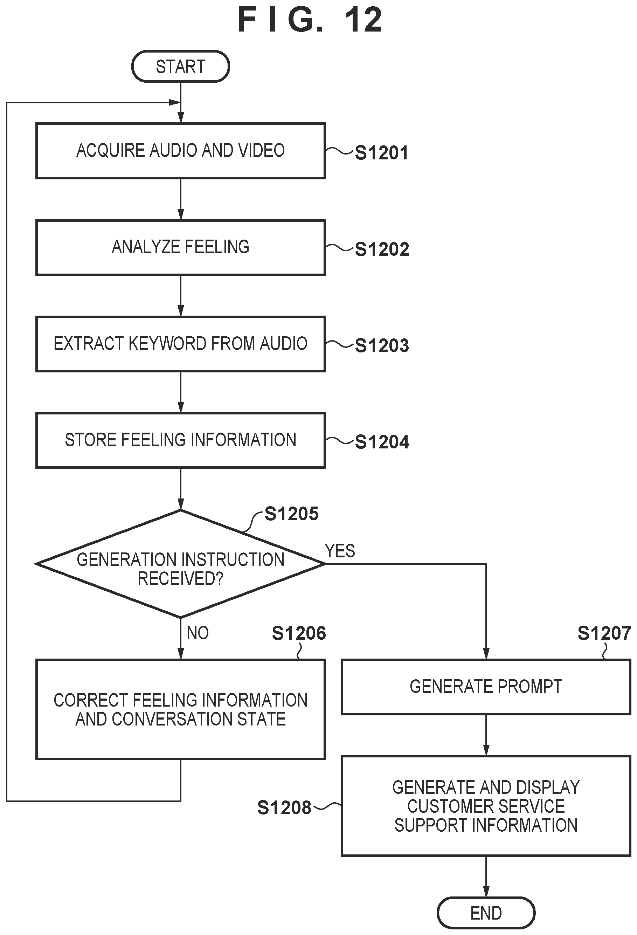

Fig. 12 is a flowchart for explaining generation processing of customer service support information according to the second embodiment. The processing shown in Fig. 12 is started when, for example, the information processing apparatus 100 receives a material generation start instruction from the clerk via an input unit 101.

Steps S1201 to S1204 and S1206 are the same as steps S702 to S705 and S709 in the first embodiment and a description thereof will be omitted.

In step S1205, the input unit 101 determines whether a customer service support information generation instruction is received. If it is determined that a customer service support information generation instruction is received (YES in step S1205), the input unit 101 advances the process to step S1207. On the other hand, if it is determined that no customer service support information generation instruction is received (NO in step S1205), the input unit 101 advances the process to step S1206.

In step S1207, the extraction unit 204 generates the prompt 1000 by inserting the keyword of keyword information 400 into a template 920. More specifically, based on a conversation state and correction information, the extraction unit 204 acquires the specific template 920 from template information 900 for generating the prompt 1000. Furthermore, the extraction unit 204 corrects the contents of the prompt 1000 based on the keyword information 400 and the correction information.

Based on the conversation state, the extraction unit 204 acquires the specific template 920 from template information 900 stored in advance in the database server (not shown) or the like. The template 920 includes, for example, "please generate the catalog material of "product name" based on "keyword"". Next, the extraction unit 204 generates the prompt 1000 by inserting the product category, the product name, and the selected keywords managed together with the conversation state into the template 920.

In step S1208, the generation unit 205 generates the customer service support information 1100 based on the prompt 1000 generated by the extraction unit 204. Then, the generation unit 205 displays the generated customer service support information 1100 on a display unit 102, and ends the processing.

This embodiment has explained generation of a product catalog as an example of the customer service support information 1100 but the introduction moving image of the product and/or a customer service phrase may be generated as other customer service support information.

As described above, according to the second embodiment, customer service support information (that is, a product catalog to be presented to the user) that supports the customer service by the clerk can efficiently be generated based on a conversation between the clerk and the user (customer). This customer service support information can reduce the customer service workload of the clerk and improve the purchase intention of the user.

### <Other Embodiments>

The embodiments have been described in detail, but the present invention can take an embodiment as a system, an apparatus, a method, a program, or a recording medium (storage medium). More specifically, the present invention may be applied to a system formed by a plurality of devices (for example, a host computer, an interface device, an image capturing apparatus, a Web application, and the like) or an apparatus formed by a single device.

The object of the present invention is achieved by the following configuration, as a matter of course. That is, a recording medium (or storage medium) that records software program codes (computer programs) for implementing the functions of the above-described embodiments is supplied to a system or an apparatus. The storage medium is a computer-readable storage medium, as a matter of course. Then, the computer (or CPU or MPU) of the system or the apparatus reads out and executes the program codes stored in the recording medium. In this case, the program codes read out from the recording medium implement the functions of the above-described embodiments by themselves, and the recording medium that records the program codes constitutes the present invention.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-200138 filed November 27, 2023, which is hereby incorporated by reference herein in its entirety.

## Claims

1. An information processing apparatus comprising:
acquisition means for acquiring feeling information of a user based on at least one of a captured image and an audio of the user;
prompt generation means for generating a prompt based on the feeling information and a keyword extracted from the audio; and
output means for outputting a response obtained using the prompt generated by the prompt generation means.

2. The information processing apparatus according to claim 1, wherein the prompt generation means generates the prompt based on at least one keyword specified based on the feeling information from a plurality of keywords extracted from the audio.

3. The information processing apparatus according to claim 2, wherein the prompt generation means generates the prompt based on at least one keyword associated with a specific type of a feeling among the plurality of keywords extracted from the audio.

4. The information processing apparatus according to claim 3, wherein the prompt generation means generates the prompt based on, among the plurality of keywords extracted from the audio, at least one keyword that is associated with the specific type of the feeling and has a likelihood indicating the feeling, which is not less than a threshold.

5. The information processing apparatus according to claim 1, further comprising correction means for correcting a conversation state based on the keyword extracted from the audio,
wherein the prompt generation means generates the prompt in accordance with the conversation state with the user.

6. The information processing apparatus according to any one of claims 2 to 4, further comprising correction means for correcting, in a case where feeling information associated with a keyword at a first time is different from feeling information associated with the same keyword as the keyword at a second time earlier than the first time, the feeling information of the keyword at the first time based on the feeling information of the keyword at the second time,
wherein the prompt generation means generates the prompt based on the at least one keyword specified based on the feeling information after the correction by the correction means.

7. The information processing apparatus according to claim 5, wherein the correction means changes the conversation state in response to acceptance of a user operation of removing, from a display screen, at least one keyword among the keywords extracted from the audio.

8. The information processing apparatus according to claim 5, wherein the correction means changes the conversation state to another conversation state different from the conversation state based on a ratio at which the feeling information includes a specific feeling.

9. The information processing apparatus according to claim 8, wherein the specific feeling includes at least one of fear, sadness, anger, contempt, and disgust of the user.

10. The information processing apparatus according to claim 5, wherein the prompt is generated by inserting the extracted keyword into a template corresponding to the conversation state.

11. The information processing apparatus according to claim 1, wherein the acquisition means acquires the feeling information of the user based on an audio in a conversation between the user and another user different from the user.

12. The information processing apparatus according to claim 1, wherein the prompt generation means generates the prompt based on the keyword extracted from the audio and contents of the response output by the output means.

13. The information processing apparatus according to claim 1, wherein the output means executes at least one of display control for displaying the response on a display screen and audio control for outputting the response by an audio.

14. A method executed by an information processing apparatus, comprising:
an acquisition step of acquiring feeling information of a user based on at least one of a captured image and an audio of the user;
a prompt generation step of generating a prompt based on the feeling information and a keyword extracted from the audio; and
an output step of outputting a response obtained using the prompt generated in the prompt generation step.

15. A program for causing a computer to execute:
an acquisition procedure of acquiring feeling information of a user based on at least one of a captured image and an audio of the user;
a prompt generation procedure of generating a prompt based on the feeling information and a keyword extracted from the audio; and
an output procedure of outputting a response obtained using the prompt generated by the prompt generation procedure.
